# EUROPEAN PATENT APPLICATION

(11) **EP 1 616 668 A1**
(43) Date of publication of application: **18.01.2006**
(21) Application number: 04254233.2
(22) Date of filing: 15.07.2004
(51) Int. Cl.: B25B 27/24, F16K 5/06

(54) **Tool for assembling and dismantling valves**

(71) Applicant: BAE Systems Ltd, London SW1Y 5AD (GB)
(72) Inventor: Rowe, Graham John Edward, Somerset, TA7 8AD (GB)
(74) Representative: Wildman, David Brian

(57) **Abstract**

This invention relates to a valve tool (1), and more particularly to a tool for assembling and dismantling valves, for example ball valves (6). Dismantling is necessary before essential cleaning and maintenance of the valve can be carried out.

A tool is provided for dismantling a ball valve having a ball (62) and a body portion (61), the tool comprising a holder (4) and a piston (10) arranged such that when the ball valve is placed in the holder, the piston is operable to controllably loosen the ball in the valve. The piston is able to push the ball out of the body portion. The component parts of the valve are then completely removed by the tool for cleaning. The use of such a tool obviates the need for prior-known haphazard and potentially dangerous techniques of bringing the valve sharply down on a protruding object.

## Description

This invention relates to a valve tool, and more particularly to a tool for assembling and dismantling valves, for example ball valves.

Ball valves are well known and are used widely in a variety of industries. A ball valve consists of a ball, through which there is a passage, sealed into a valve body, for example by O-rings. The ball valve can be integrated into a pipe. The ball can be rotated between an "open" position, in which the passage is in line with the pipe, and a "closed" position in which the passage is perpendicular to the pipe. Fluids can pass through the valve in the open position, but not when the valve is in the closed position. In order for the valves to function effectively, the ball and other component parts, such as the O-ring seals, must be cleaned from time to time to ensure that a good seal is maintained. However, before the valve components can be cleaned, the valve must be dismantled in order for full access to be gained to the components. Prior to the invention, this has been accomplished by hand. The valve is brought down sharply onto a protruding object so that the ball is hit by the object and forced out of the valve body by the impact. This procedure is somewhat haphazard and uncontrollable and results in damage to the ball valve. The ball itself can be damaged by the impact, thus reducing the effectiveness of the valve since the quality of the seals depends on smooth and clean surfaces. The valve mechanism may also be damaged. Furthermore, the procedure is dangerous, particularly when, in normal operation, fine particles flow through the valve. Similar problems are encountered when the ball valve is reassembled.

Prior to the invention, no tool existed for dismantling or reassembling ball valves. It is therefore an object of the present invention to provide a tool for dismantling and re-assembling ball valves with a corresponding reduction in risk of damaging the valve. It is a further object of the invention to provide a tool for more safely and controllably dismantling and re-assembling ball valves.

According to a first aspect of the invention, there is provided a tool for dismantling a ball valve, the ball valve having a ball and a body portion, the tool comprising a holder and a piston arranged such that when the ball valve is placed in the holder, the piston is operable to controllably loosen the ball in the valve. Optionally, the piston is operable to push the ball out of the body portion. The component parts of the valve are then completely removed by the tool for cleaning. The use of such a tool obviates the need for the prior-known haphazard technique of bringing the valve sharply down on a protruding object. Instead, the piston is used to loosen or remove the ball from the body portion of the valve by pushing the ball whilst the body portion is held securely in place in the holder. Dismantling the valve is made quick, safe and controllable by use of the tool. The tool also reduces the risk of human error or accident in the dismantling of the ball valve. The controllable dismantling procedure reduces wear on a valve component and hence increases the service life of the valve. Advantageously, the design of the tool is simple and uses off-the-shelf parts so that the tool is inexpensive to manufacture.

Conveniently, the piston comprises an air piston. The motion of the air piston is pneumatic and smooth, so that the dismantling process does not involve the sharp impact of prior known techniques. Instead, the process is predictable and controllable, further reducing the damage to the ball valve.

Advantageously, the holder comprises a releasable member operable to hold the body portion in a predetermined position in the holder. For dismantling, the body portion of the valve is held such that the piston pushes along the axis of the ball. Optionally, the releasable member may comprise either a retaining bolt or a clamp. Using a releasable member allows ball valves to be placed in and removed from the tool with ease, making the tool simple to operate.

Advantageously, the piston is provided with a cupped endpiece shaped to match the curvature of the outer surface of the ball. Optionally, the piston is at least partially fabricated from nylon. The endpiece of the piston pushes the ball, and careful design of the endpiece to complement the shape of the ball, combined with the use of a suitable material such as nylon for the pushing surface of the endpiece, further reduces the risk of damage to the ball.

Conveniently, the tool is further operable to reassemble a ball valve. By placing the ball and seat assembly partially in the body portion of the valve, the tool may be used to push the ball and seat assembly fully into position in the body portion. This advantageously allows one tool to be used for both dismantling and reassembling the ball valve.

According to a second aspect of the invention, there is provided a tool for dismantling a valve, the tool comprising a holder and a piston operable to move towards the holder.

According to a third aspect of the invention, there is provided a method of dismantling a ball valve having a ball and a body portion comprising the steps of placing the valve in a holder and controllably pushing the ball out of the body.

The invention will now be described by way of example only with reference to the accompanying drawings in which:
Figure 1 shows a cross-sectional view of a ball valve in the open position;
Figure 2 shows a cross-sectional side view of an embodiment of the invention with a ball valve;
Figures 3 and 4 show the embodiment of Figure 2 in use to dismantle the ball valve; and
Figure 5 shows a side view of a part of the embodiment of Figure 2.

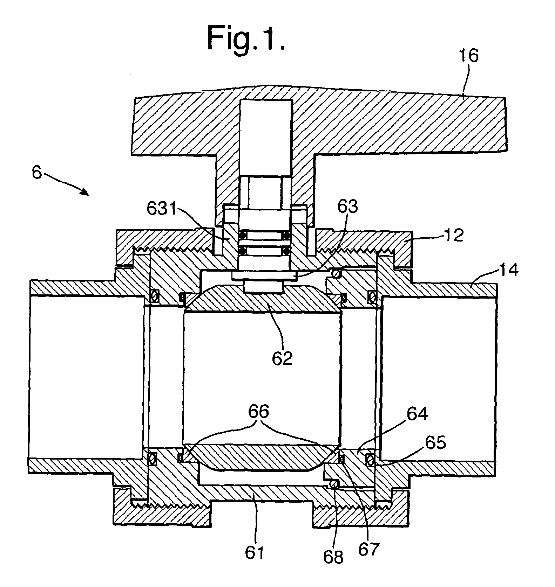

Figure 1 shows a cross-sectional view of a ball valve 6. The ball valve has body portion 61 and ball 62. In normal operation, union nuts 12 and union adaptors 14 hold the ball in the body portion of the valve 6. They are therefore removed by hand before a tool according to an embodiment of the invention is used to dismantle the valve 6. Handle 16 is also removed prior to dismantling. As shown, body portion 61 has an upwardly extending portion 631 that accommodates spindle 63. The spindle 63 extends partially into the ball 62 and into handle 16 such that handle 16 can be used to rotate ball 62 between open and closed positions. In Figure 1, ball 62 is in the open position. The ball 62 is held in position by seat 66 and seat holder 64. O-ring 68 provides a seal between the body portion 61 and the seat holder 64, and O-ring 67 provides a seal between the seat holder 64 and the seat 66, and O-ring 65 provides a seal between the seat holder 64 and, when present, the union adaptors 14.

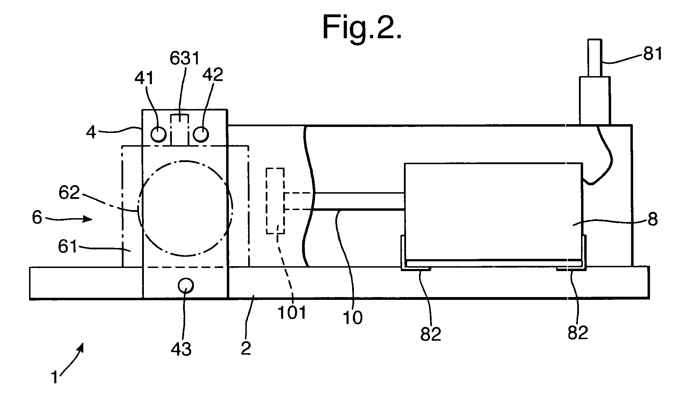

Figure 2 shows a tool 1 in accordance with an embodiment of the invention. The tool comprises base 2, holder 4, retaining bolts 41 and 42, air lever 8 and piston 10. Air lever 8 is operated by switch 81, and is held in position on base 2 by brackets 82. Holder 4 is also attached to base 2 by bolts 43 or welding. Also shown schematically in dashed line is a ball valve 6 having body portion 61 and ball 62. Ball 62 is removed from body portion 61 by a method embodying the invention.

In order to remove the ball 62 from the body portion 61, the valve is placed in the holder 4 of tool 1, with the valve in the closed position and peripheral parts such as union nuts, union adaptors and handle removed, such that the seat holder 4 faces away from the piston 10, and spindle 63 projects upwards and in between retaining bolts 41 and 42 as shown in Figure 2. Conveniently, bolt 41 may be easily slid out of the tool 1 such that the valve can be placed in the appropriate position in the valve holder 4. Once the valve is in position, the bolt 41 is replaced and the valve rests in the holder 4 with the bolts 41 and 42 on either side of the valve spindle 63. Bolts 41 and 42 then hold the body portion 61 at the protrusion 631. The body portion 61 is thus held in place while the tool is in use. Bolts 41 and 42 are adequately fixed in place by simply sliding through the holes in the holder 4.

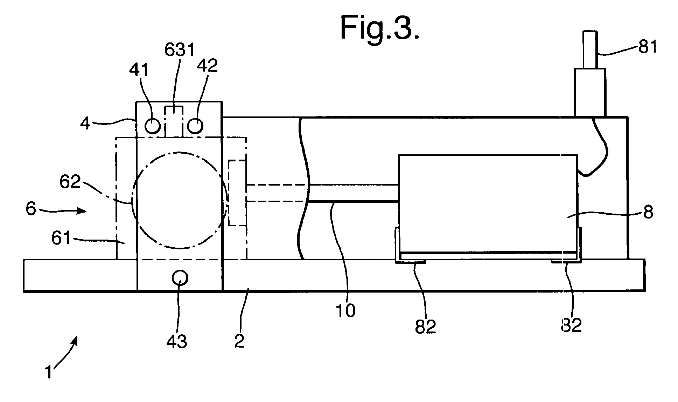

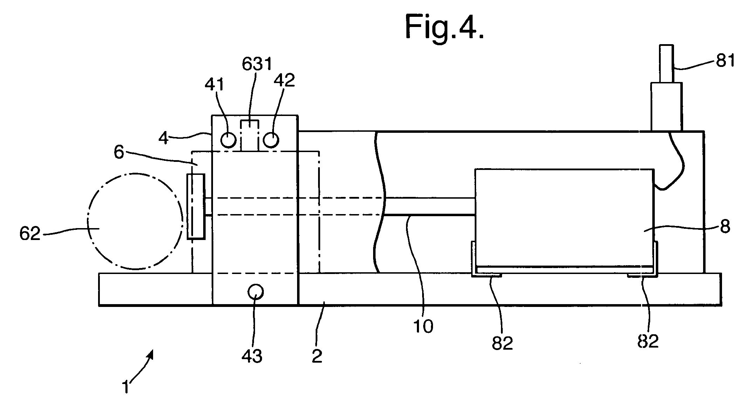

Once the ball valve is in place, the air lever 8 is operated (by switch 81) so that piston 10 moves towards holder 4. Piston 10 thus moves towards the ball valve 6. The piston 10 is positioned such that it will strike the ball valve 6 at the ball 62, and not the body portion 61. This situation is shown in Figure 3. Piston 10 pushes the ball 62 so as first to loosen the ball 62 and seat holder 64, and then to push the ball 62 off the spindle 63 and out of the body portion 61, along with the seat holder 64 and O-rings 67 and 68, as shown in Figure 4. During this procedure, the valve body 64 is held in the valve holder 4 by bolts 41 and 42. Note that the controllable nature of the piston movement significantly reduces the risks involved in dismantling the ball valve - both to the operator and the valve itself. The tool 1 also provides a quick and convenient method of dismantling the ball valve.

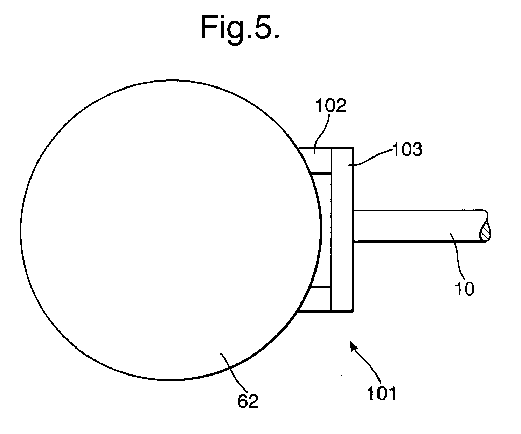

To further reduce the risk of damage to the ball valve, piston 10 is provided with an endpiece 101 fitted to the end of its shaft, shown in more detail in Figure 5, where the endpiece 101 is shown pushing ball 62. The pushing surface of endpiece 101 is fabricated from a material such as nylon or a plastic that is unlikely to scratch or damage the surface of the ball 62, and is cup-shaped so as to match the curvature of the ball 62.

The apparatus may also be used to re-assemble a ball valve. Ball 62, seat holder 64, seat 66 and O-rings 67 and 68 are placed loosely in the body portion 61. Then, placing the partially assembled valve in tool 1 facing the opposite direction as for dismantling, but with the valve spindle 63 still projecting upwards, and fitting a larger adaptor to the piston, the ball and seat assembly can be fully pressed back into position on the spindle 63 by operation of the piston 10. The remaining parts of the valve including the union nuts, union adaptors and handle are then replaced by hand to complete the re-assembly process.

It should be noted that the embodiment described above is purely exemplary, and other embodiments falling within the scope of the invention will be immediately obvious to one skilled in the art. For example, the force required to push the ball out of the valve is not great. Any suitable pushing means that can provide a controllable, smooth piston motion, such as, for example, a shaft attached to a hydraulic piston could be used to replace air lever 8 and piston 10. The valve holder 4 and retaining bolts 41 and 42 may also be replaced by, for example, clamping means. It is further possible for the nylon cap 101 on the end of shaft 10 to be replaced by any suitable end piece that would not cause damage to bolt 6, such as a rubber or plastic disk.

## Claims

1. A tool for dismantling a ball valve, the ball valve having a ball and a body portion, the tool comprising a holder and a piston arranged such that when the ball valve is placed in the holder, the piston is operable to controllably loosen the ball in the valve.

2. A tool as claimed in claim 1 wherein the piston is operable to push the ball out of the body portion.

3. A tool as claimed in any preceding claim wherein the piston comprises an air piston.

4. A tool as claimed in claim 1 or claim 2 wherein the holder comprises a releasable member operable to hold the body portion in a predetermined position in the holder.

5. A tool as claimed in claim 3 wherein the releasable member comprises a retaining bolt.

6. A tool as claimed in claim 1 or claim 2 wherein the releasable member comprises a clamp.

7. A tool as claimed in any preceding claim wherein the piston is provided with a cupped endpiece shaped to match the curvature of the outer surface of the ball.

8. A tool as claimed in any preceding claim further operable to re-assemble a ball valve.

9. A tool for dismantling a valve, the tool comprising a holder and a piston operable to move towards the holder.

10. A method of dismantling a ball valve, having a ball and a body portion comprising the steps of:
placing the valve in a holder;
and controllably pushing the ball out of the body.
